# EUROPEAN PATENT APPLICATION

(11) **EP 3 868 687 A1**
(43) Date of publication of application: **25.08.2021**
(21) Application number: 20158586.6
(22) Date of filing: 20.02.2020
(51) Int. Cl.: B65D 85/804

(54) **BEVERAGE CAPSULE, ASSOCIATED FILLING METHOD, CAPSULE FILLING APPARATUS AND BEVERAGE**

(71) Applicant: AAA Accelerator Group Europe AG, 6317 Oberwil b. Zug (CH)
(72) Inventor: Titz, Peter Josef Johannes, 6317 Oberwil b. Zug (CH)
(74) Representative: Wallinger, Michael

(57) **Abstract**

Disclosed is a capsule for the preparation of a beverage in a beverage machine by feeding liquid into the capsule and extracting a beverage out of the capsule. The capsule comprises containment walls forming an interior cavity containing a beverage precursor for mixing with the liquid in the cavity, wherein the beverage precursor comprises a layer of compressed coffee precursor and a layer comprising a further substance, wherein the layer of compressed coffee precursor is more compressed than the layer comprising the further substance. Also disclosed is a capsule for the preparation of a beverage in a beverage machine by feeding liquid into the capsule and extracting a beverage out of the capsule through an outlet side of the capsule, wherein the capsule comprises containment walls forming an interior cavity containing a beverage precursor for mixing with the liquid in the cavity, wherein the beverage precursor comprises a layer of coffee precursor and a layer comprising a further substance comprising an algae product, wherein the layer comprising the further substance is located between the layer of coffee precursor and the outlet side. Also disclosed is a corresponding method of filling a capsule, a beverage obtained from a capsule and a capsule filling apparatus.

## Description

The present invention relates to a capsule for the preparation of a beverage, a method of filling the beverage capsule, a capsule filling apparatus and a beverage obtained from the beverage capsule.

Capsules for the preparation of a beverage, also referred to as "beverage capsule", hereinafter simply "capsule" are well-known. Typically, the capsule is inserted into a beverage extraction machine (or simply "beverage machine"), such as a coffee machine. Liquid, in particular water, in particular heated water, is then fed under pressure into the capsule to interact with the contents of the capsule, herein also referred to as "beverage precursor", as a result of which a beverage is extracted from the capsule. The beverage can then flow towards an outlet, typically into a removable cup or a similar container placed under the outlet.

EP 0 512 470 A1 discloses a capsule for use in such a beverage machine.

Capsules (or cartridges, as they are sometimes referred to) typically have semi-rigid containment walls, for example made from, or with, relatively thin aluminium, plastics or compostable material. Prior art capsules of this type often have a frustoconical shape, whereby, before any beverage precursor is filled into the capsule, one side (typically the larger one of the e.g. circular end faces) is left open. Beverage precursor, such as ground coffee granules or coffee powder, is then supplied through the opening into the cavity formed by the containment walls. Typically, the beverage precursor is then mechanically compressed (or compacted - these expressions are intended to have the same meaning in the present context). During compressing the ground coffee powder, which is initially present in a relatively loose condition, is pressed together, thereby reducing the total volume of any voids between individual granules of beverage precursor. Compressing the beverage precursor, in particular ground coffee, is believed to result in a higher quality beverage after beverage extraction.

After the beverage precursor has been filled into the capsule (and, if applicable, compressed), the opening of a typical capsule is sealed in a manner in principle known in the art, for example using aluminium foil, plastics or compostable material.

During extraction of a beverage, the capsule is inserted into a beverage machine. Some beverage machines are provided with a hollow member which, either actuated manually or automatically, is moved towards, and partially into, the capsule so as to pierce the capsule. In some beverage machines intended for use with generally frustoconical capsules, the hollow member is arranged to pierce the thinner (e.g. generally circular) end face, i.e. that side of the capsule which is opposite the side on which the seal for sealing the opening has been applied.

After insertion of the hollow member into the capsule, liquid such as (heated) water is fed through the hollow member into the capsule so that the liquid mixes with the beverage precursor, and the pressure in the capsule increases.

Once the pressure inside the capsule has increased sufficiently, the beverage flows out of the capsule. To this end, the capsule can be provided with one or more outlet openings which are formed during manufacture of the capsule. Alternatively, or additionally, one or more outlet openings can form during the extraction process, whereby the one or more outlet openings can either be the result of the increase in pressure in the capsule (i.e. the capsule partly "breaks open") or can be formed in a separate operation, e.g. by the containment wall being pierced by one or more piercing members. Either way, the one or more outlet openings are typically large enough so that the beverage can leave the capsule without significant filtering (which otherwise might negatively affect the flavour of the beverage), yet small enough so as to retain beverage precursor particles (granules) above a certain size.

With some beverage machines, the one or more outlet openings are formed on the larger end face of a generally frustoconical capsule, which may be the side of the seal.

The side via which the hollow member pierces the capsule and liquid is supplied into the capsule can be regarded as an inlet side and the side on which the beverage leaves the capsule can be regarded as an outlet side. Typically, the inlet side and the outlet side are located on opposite sides of the capsule.

The present invention seeks to provide an alternative beverage capsule, method of filling a beverage capsule, capsule filling apparatus and beverage, in particular an improved beverage capsule, method of filling a beverage capsule, capsule filling apparatus and beverage.

Aspects of the invention are set out in the independent claims.

According to one aspect, the present invention provides a capsule for the preparation of a beverage in a beverage machine by feeding liquid into the capsule and extracting a beverage out of the capsule, wherein the capsule comprises containment walls forming an interior cavity containing a beverage precursor for mixing with the liquid in the cavity, wherein the beverage precursor comprises a layer of compressed coffee precursor and a layer comprising a further substance, wherein the layer of compressed coffee precursor is more compressed than the layer comprising the further substance.

The present inventors have found that providing the layer comprising the further substance as a layer which is less compressed than the layer of coffee precursor results in a beneficial effect, at least with some types of further substances. The inventors have found that, in a typical beverage machine of the type mentioned above, the liquid, in particular water, which is heated by the beverage machine, typically enters the capsule, in particular via a hollow member as described above, at a lower temperature during an initial, first period than during a later, second period. Such lower temperatures may not be optimal for extracting (liquid) coffee from the coffee precursor but may be sufficient and perhaps even ideal for producing a beverage from, or based on, the further substance. This can in particular be the case if the further substance is soluble or at least partially soluble in the liquid.

In the present context, the term "partially soluble in the liquid" means in particular that at least a portion of the further substance is soluble in the liquid. For example, the further substance may include components A and B, whereby component A is soluble in the liquid and component B is not soluble in the liquid and may for example remain in the capsule. Further, in embodiments of the present invention, it is possible that, whilst the further substance or a component of the further substance is soluble in the liquid, less than 100% of the further substance content (or the relevant component) will actually be dissolved in the liquid and leave the capsule during delivery of the beverage.

The present inventors have found that, providing the layer comprising the further substance as a layer which is less compressed than the layer of coffee precursor, can have the effect that the liquid more easily reaches all regions of the layer of the further substance and can therefore help to extract the beverage (or beverage component) based on the further substance. In particular, this can help to accelerate the extraction process based on the further substance when compared with the use of a similar capsule in which the further substance is either provided as a layer which is compressed to the same or even a higher degree than the layer of coffee precursor, or where the further substance and the coffee precursor are substantially intermixed (and compressed to the same degree), i.e. where the further substance and the coffee precursor do not form two substantially separate layers.

The inventors have found that, surprisingly, the improved extraction of a beverage based on the further substance as described above can be achieved even if the liquid also has to pass through the layer of compressed coffee precursor, either before reaching the layer comprising the further substance or after passing through that layer.

According to an embodiment, the capsule comprises an outlet side through which the beverage is arranged to be extracted, wherein the layer comprising the further substance is located between the layer of coffee precursor and the outlet side.

The inventors have found that the extraction of a beverage based on the further substance, in particular during the initial period mentioned above, works particularly well if the liquid does not need to pass through the layer of compressed coffee after passing through the layer comprising the further substance. In this regard, it is particularly preferred if the layer comprising the further substance is located adjacent the boundary of the cavity at the outlet side, in particular the containment wall (seal) of the capsule on the outlet side. The coffee precursor may be located adjacent the boundary of the cavity on an inlet side, in particular adjacent the containment wall on the inlet side.

According to an embodiment, the further substance is more heat-sensitive than the coffee precursor.

The better or accelerated extraction of the beverage based on the further substance may be particularly beneficial if the further substance is more heat-sensitive than the coffee precursor. The further substance may for example be negatively affected, or degrade, at a temperature above a certain threshold temperature, for example 60°. The degradation may be more severe the higher the temperature. The degradation may manifest itself in terms of a degraded taste of the resulting beverage or in terms of reduced health benefits. As explained, in a typical beverage machine, the liquid is supplied into the capsule at a lower temperature during a first period than during a second period. The temperature during the first period may in particular be lower than the threshold temperature above which a degradation of the further substance is to be expected. Due to the fact that the layer comprising the further substance is less compressed than the layer of the coffee precursor, the extraction of a beverage (or a beverage component) based on the further substance may be (substantially) complete (or at least more advanced) during the first period so that any degradation of the further substance is prevented or at least reduced when compared with a capsule in which the layer comprising the further substance is compressed to the same degree as, or to a higher degree than, the layer of the coffee precursor, or where the further substance and the coffee precursor are intermixed and compressed to the same degree.

The extraction of (liquid) coffee from the coffee precursor (mainly) takes place during the second period, during which the liquid entering the capsule is hotter.

According to an embodiment, the further substance comprises an algae product, such as a marine micro algae product.

Algae products added to coffee capsules can have a positive effect in terms of improved taste and/or health benefits. Many algae products, however, are more heat-sensitive than coffee precursor so that the provision of a compacted coffee precursor layer and a layer comprising a further substance which is less compressed than the layer of coffee precursor is particular advantageous in connection with a capsule in which the further substance comprises an algae product.

According to a second aspect, the present invention provides a capsule for the preparation of a beverage in a beverage machine by feeding liquid into the capsule and extracting a beverage out of the capsule through an outlet side of the capsule, wherein the capsule comprises containment walls forming an interior cavity containing a beverage precursor for mixing with the liquid in the cavity, wherein the beverage precursor comprises a layer of coffee precursor and a layer comprising a further substance comprising an algae product, wherein the layer comprising the further substance is located between the layer of coffee precursor and the outlet side.

According to the second aspect, the layer comprising the further substance does not necessarily have to be less compressed than the layer of coffee precursor (although this is particularly advantageous). Even if the level of compression is the same for both layers, the extraction of the beverage (component) based on the further substance - in this case an algae product - can be accelerated and/or enhanced, as described above, if, as per the second aspect, the layer comprising the further substance is located between the layer of coffee precursor and the outlet side. This particular arrangement of the layers can help to ensure that the beverage or beverage component based on the further substance can leave the capsule relatively quickly, in particular during the first period during which the temperature of the liquid supplied into the capsule is lower than during the second period.

According to an embodiment, the algae product comprises an algae, an algae extract of the algae (such as proteins of Phycocyanin and/or Allophycocyanin and/or Phycoerythrin) or algae biomass, such as a marine micro algae, a marine micro algae extract or marine micro algae biomass. In a particular embodiment, the algae product is Spirulina or a product derived therefrom. The term "Spirulina", as used herein, refers to an Arthrospira species, such as the biomass of an Arthrospira species (or a product derived therefrom), particularly the dried biomass of an Arthrospira species. Typically, "Spirulina" refers to the Arthrospira species "Arthrospira platensis".

The inventors have found that the invention according to the first or second aspect is particularly beneficial in connection with these types of algae product.

According to an embodiment, the further substance is at least partially soluble in water, in particular substantially soluble in water (more particularly soluble in water), in particular at temperatures above 55°C and/or at acidic pH values (such as at the pH value of coffee, which typically has a pH value of about 4.5 to 6).

Given the solubility of the further substance, the further substance can leave the capsule relatively quickly, in particular during the first period.

According to an embodiment of the first or second aspect, the layer of coffee precursor occupies substantially the entire cross-section of the cavity in a first plane, and/or the layer comprising the further substance occupies substantially the entire cross-section of the cavity in a second plane.

The expression "occupies substantially the entire cross-section of the cavity in a first plane" is preferably to be understood such that it allows for the presence of voids between individual granules or similar of the coffee precursor. Such voids can for example be filled with air or an inert gas, such as CO₂ or N₂. In other words, this expression is not to be understood in such a way that, at each and every position of the cross-section of the cavity in the first plane, coffee precursor must be present. However, no significant amounts of other material, such as in particular non-compressed coffee precursor or significantly less-compressed coffee precursor or the further substance, are present in the cross-section of the cavity in the first plane.

The expression "occupies substantially the entire cross-section of the cavity in a second plane" is preferably to be understood in a similar way, either in addition or alternatively.

Preferably, the first plane and the second plane are parallel with respect to each other.

Further, whilst the layer of coffee precursor and the layer comprising the further substance are substantially separate, i.e. the coffee precursor and the further substance are substantially not intermixed, in particular in the first plane and in the second plane, a certain degree of mixing may take place at the interface between the layer of coffee precursor and the layer comprising the further substance. However, the depth over which the coffee precursor and the further substance are mixed is significantly smaller than the depth of the layer of coffee precursor and/or the layer comprising the further substance, preferably less than 20% of that depth, more preferably less than 10% of that depth.

According to an embodiment of the first or second aspect, the layer of coffee precursor is compressed with a pressure of over 1 bar, more preferably with a pressure of over 2 bar, still more preferably with a pressure of over 2.5 bar, and most preferably with a pressure of over 3 bar, and/or the layer comprising the further substance is compressed with a pressure of less than 1 bar, more preferably with a pressure of less than 0.8 bar, more preferably with a pressure of less than 0.6 bar, more preferably with a pressure of less than 0.5 bar, still more preferably with a pressure of less than 0.4 bar and most preferably with a pressure of about 0.32 or 0.3 bar.

The levels of compression listed above respectively for the layer of coffee precursor and the layer comprising the further substance have been found by the present inventors to result in beverages of good quality in terms of taste and careful treatment of the further substance, thereby preserving potential health benefits.

The pressure values listed above are to be understood to be in addition to any ambient pressure, such as atmospheric pressure.

According to a third aspect, the present invention provides a method of filling a capsule, the capsule being a capsule for the preparation of a beverage in a beverage machine by feeding liquid into the capsule and extracting a beverage out of the capsule, wherein the method comprises:
- providing a capsule comprising containment walls and an opening, the containment walls and the opening defining an interior cavity,
- supplying a beverage precursor through the opening into the cavity, the beverage precursor being for mixing with the liquid in the cavity and comprising coffee precursor and a further substance, and
- substantially sealing the opening,
wherein supplying the beverage precursor through the opening into the cavity comprises:
- supplying the coffee precursor through the opening into the cavity,
- compressing the coffee precursor so as to form a layer of compressed coffee precursor in the cavity, and
- supplying the further substance through the opening into the cavity so as to form a layer comprising the further substance in the cavity,
wherein the layer of compressed coffee precursor is more compressed than the layer comprising the further substance.

The layer comprising the further substance may be substantially un-compressed or slightly compressed, which may help to prevent mixing of the coffee precursor and the (layer comprising the) further substance, e.g. when the capsule is shaken, for example during transport. In any event, the level of compression of the layer comprising the further substance is lower than the level of compression of the layer of coffee precursor.

The compression of the layer of coffee precursor and, if applicable, the layer comprising the further substance is preferably done by mechanical means, similar to the tapping action typically used in the traditional ("barista style") way of preparing an espresso.

Preferably, the coffee precursor is supplied into the cavity and then compressed before the further substance is supplied into the cavity. This makes it easier to compress the coffee precursor to the desired degree without thereby also compressing the (layer comprising the) further substance. However, in principle it is also possible to supply the further substance into the cavity first, and then to supply the coffee precursor into the cavity and then to compress the coffee precursor. The compression tends to "propagate" through the material being compressed, so it is in principle possible, through appropriate control of the compressing action, to terminate the compressing action just as the compression reaches the interface between the layer of coffee precursor and the layer comprising the further substance.

Preferably, the opening through which the coffee precursor and the further substance are supplied into the cavity is formed at an axial end of the capsule and/or on a side of the capsule which has a larger area than the opposite side. This makes it easier to compress the coffee precursor.

The larger side of the capsule (where the opening is preferably located) can for example be the outlet side and the opposite side of the capsule can be the inlet side for supplying the liquid into the capsule during use of the capsule to prepare a beverage. In this case, coffee precursor can be supplied into the capsule, in particular with the aid of gravity, so that the coffee precursor forms a layer of coffee precursor in the capsule adjacent the inlet side. The layer may initially be substantially un-compacted and may be somewhat heaped. Assuming the opening is at the topmost position of the capsule (in the filling position of the capsule), the (substantially uncompressed) coffee precursor may fill substantially the entire cavity up to the level of the opening of the capsule. Alternatively, the level up to which the coffee precursor reaches may be lower than the level of the opening, or may be higher than the level of the opening. In the latter case, a filling aid is preferably used, such as a tubular member whose cross-section approximately corresponds to the cross-section of the opening of the capsule. This tubular member would be placed in close proximity to the opening so as to retain the coffee precursor above the opening, thereby substantially preventing spillage. A mechanical member used for compressing the coffee precursor can then be moved through the tubular member and into the capsule so as to compress the coffee precursor to the desired level. If no filling aid is used (e.g. if the (uncompressed) coffee precursor does not project above the level of the opening), the mechanical member can also be moved into the capsule so as to compress the coffee precursor in order to form the layer of compressed coffee precursor in the cavity.

Once the coffee precursor has been compressed, a void is formed between the layer of compressed coffee precursor and the level of the opening of the cavity. This provides a space for the layer comprising the further substance. Accordingly, the further substance can be filled into the cavity in a similar way as the coffee precursor. The further substance can then also be compressed, in particular by means of a mechanical member, so as to form the layer comprising the further substance. As mentioned, the level of compression of the layer comprising the further substance is less than the level of compression of the layer of coffee precursor.

A filling aid, such as a tubular member, may again be used.

The (opening of the) cavity can then be sealed, as is in principle known in the art.

A fourth aspect of the present invention provides a method of filling a capsule, the capsule being a capsule for the preparation of a beverage in a beverage machine by feeding liquid into the capsule and extracting a beverage out of the capsule through an outlet side of the capsule, wherein the method comprises:
- providing a capsule comprising containment walls and an opening, the containment walls and the opening defining an interior cavity,
- supplying a beverage precursor through the opening into the cavity, the beverage precursor being for mixing with the liquid in the cavity and comprising coffee precursor and a further substance comprising an algae product, and
- substantially sealing the opening,
wherein supplying the beverage precursor through the opening into the cavity comprises:
- supplying the coffee precursor through the opening into the cavity so as to form a layer of coffee precursor in the cavity, and
- supplying the further substance through the opening into the cavity so as to form a layer comprising the further substance in the cavity,
wherein the coffee precursor and the further substance are supplied into the cavity in such a way that the layer comprising the further substance is located between the layer of coffee precursor and the outlet side.

The fourth aspect has many similarities to the third aspect and the second aspect. According to the fourth aspect, the layer of coffee precursor and the layer comprising the further substance do not necessarily have to be compressed, or the level of compression of the layer comprising the further substance may be the same as, or even greater than, the level of compression of the layer of coffee precursor. However, also with the fourth aspect, the layer comprising the coffee precursor is preferably compressed more than the layer comprising the further substance. In any event, locating the layer comprising the further substance between the layer of coffee precursor and the outlet side may have the advantages discussed above.

The filling of the capsule may be performed similar to the filling of the capsule according to the third aspect.

According to an embodiment of the third or fourth aspect, the coffee precursor and the further substance are supplied into the cavity in such a way that the layer of coffee precursor occupies substantially the entire cross-section of the cavity in a first plane, and/or the layer comprising the further substance occupies substantially the entire cross-section of the cavity in a second plane.

According to an embodiment of the third or fourth aspect, the method further comprises compressing the layer of coffee precursor with a pressure of over 1 bar, more preferably with a pressure of over 2 bar, still more preferably with a pressure of over 2.5 bar, and most preferably with a pressure of over 3 bar.

According to an embodiment of the third or fourth aspect, the method further comprises compressing the layer comprising the further substance with a pressure of less than 1 bar, more preferably with a pressure of less than 0.8 bar, more preferably with a pressure of less than 0.6 bar, more preferably with a pressure of less than 0.5 bar, still more preferably with a pressure of less than 0.4 bar and most preferably with a pressure of about 0.32 or 0.3 bar.

A fifth aspect of the present invention provides a beverage obtained from a capsule as described above and/or by means of a method as described above.

A sixth aspect of the present invention provides a capsule filling apparatus arranged to manufacture a capsule as described above and/or arranged to carry out a method as described above.

The embodiments, features and advantages discussed in connection with any of the above aspects can be applicable to any of the other aspects discussed above.

Further features of the invention become clear from the claims, the drawings and the detailed description. All features and combinations of features discussed in the present application can be used not only in the combinations explicitly mentioned herein but also in other combinations or on their own, as long as such combinations are technically possible.

Features of some embodiments will now be described with reference to the drawings.
- **Figure 1**: schematically shows a side view of a beverage capsule according to an embodiment of the present invention.
- **Figure 2**: schematically shows a first stage of a method of filling the capsule of Figure 1.
- **Figure 3**: schematically shows a second stage of a method of filling the capsule of Figure 1.
- **Figure 4**: schematically shows a third stage of a method of filling the capsule of Figure 1.
- **Figure 5**: schematically shows a fourth stage of a method of filling the capsule of Figure 1.
- **Figure 6**: schematically shows a fifth stage of a method of filling the capsule of Figure 1.
- **Figure 7**: shows a stage of an alternative embodiment of a filling process.
- **Figure 8**: shows a further stage of the alternative filling process of Figure 7.

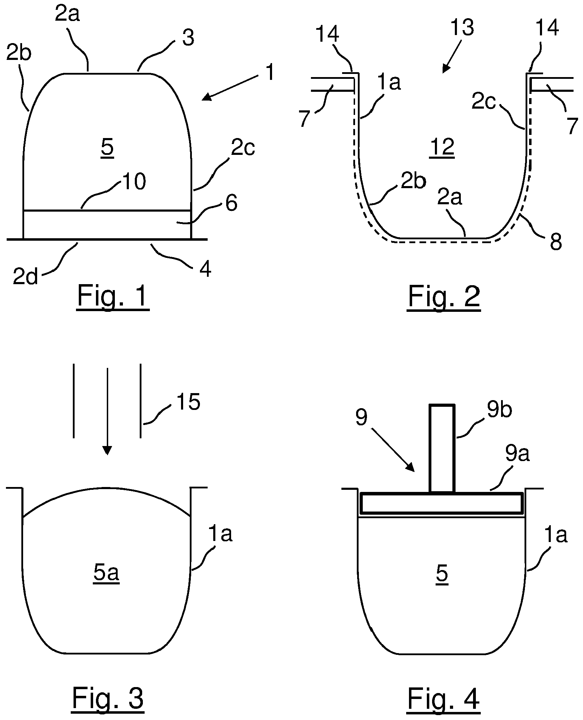

Figure 1 schematically shows a side view of a beverage capsule 1. The beverage capsule 1 comprises containment walls 2a to 2d defining a cavity 12 (see Figure 2). The capsule 1 of this embodiment has a generally frustoconical shape, although other shapes are possible. In the example shown, the capsule 1 has rotational symmetry with respect to a longitudinal axis through the capsule 1. This axis is not shown in Figure 1. In Figure 1, it would extend vertically through the centre of the capsule 1.

In the embodiment shown in Figure 1, the capsule 1 comprises a substantially cylindrical portion (approximately in the bottom half of the capsule 1), which is defined by containment wall portion 2c. In Figure 1, the top half of the capsule 1 is defined by containment wall portion 2b. As shown in Figure 1, this may differ from an exact frustoconical shape by being curved inwardly towards the top end.

Other shapes are possible for the capsule 1, including a substantially exact frustoconical shape (where the lateral containment walls do not form two distinct containment wall portions, such as portions 2c and 2b), a cylindrical shape with substantially constant cross-section from top to bottom, or a shape where the lateral wall portions have a curvature throughout when viewed from the side.

A top surface 2a is provided at the top of the capsule 1. A bottom surface 2d is provided at the bottom of the capsule 1.

In a preferred embodiment, the top surface 2a and the lateral walls 2b and 2c are formed in one piece, for example from aluminium or plastics or compostable material. The bottom surface 2d may be provided as a separate item, i.e. a seal for sealing the opening at the bottom of the side wall portion 2c so that the contents of the capsule 1 are fully enclosed on all sides. It is, however, possible that any portions of the containment walls 2a to 2d are provided with (small) perforations or similar or a weakened portion along which the capsule 1 may break open when sufficient pressure has built up within the capsule 1. Further, a filter (not shown) may be provided in the capsule, e.g. lining a portion or all of the containment walls. This filter may retain beverage precursor particles above a certain size, which may be useful in particular if the capsule breaks open during the extraction process.

In use, i.e. after insertion of the capsule into a beverage machine, a hollow member (not shown) may move downwards from above the capsule 1 and pierce the top surface 2a, as a result of which a portion of the hollow member would project into the top portion of the capsule 1. Liquid, in particular water, can then be supplied through the hollow member into the cavity 12. The top portion 2a of the containment wall can therefore be regarded as an inlet side 3. The bottom portion 2d of the containment wall can be regarded as an outlet side 4, located axially opposite the inlet side 3.

In the embodiment shown, the cavity 12 of the capsule 1 is filled with two layers 5 and 6, which meet at an interface 10. Layer 5 comprises coffee precursor, for example ground coffee. The coffee precursor 5 may be in the form of granules of a size suitable for obtaining an espresso by forcing heated water under pressure through layer 5.

Layer 6 comprises a further substance, i.e. a substance different from the coffee precursor of layer 5. In a preferred embodiment, the further substance present in layer 6 may be more heat-sensitive than the coffee precursor of layer 5, as already described. The further substance in layer 6 may, in particular, comprise an algae product, for example an algae, an algae extract, or algae biomass, in particular Spirulina or a product derived therefrom, such as Spirulina biomass, particularly dried biomass of an Arthrospira species, in particular Arthrospira platensis.

In the example shown, the majority of the cavity 12 is occupied by layer 5 of coffee precursor. A relatively small portion, such as approximately 10%, of the depth of the cavity 12 is occupied by layer 6 comprising the further substance. Other relative thicknesses of the layers 5 and 6 are possible, including layers of equal thickness, or the thickness of layer 6 being greater than the thickness of layer 5.

A method of filling the capsule 1 will now be described with reference to Figures 2 to 6. As shown in Figure 2, a blank capsule 1a comprising lateral wall portions 2b and 2c and end wall 2a is provided. When compared with the capsule 1 shown in Figure 1, the blank capsule 1a shown in Figure 2 is in an upside-down orientation so that the smaller end wall 2a (which was the top portion in Figure 1) is now located at the bottom. The opposite end of the blank capsule defines an opening 13, via which the cavity 12 (i.e. the space within the blank capsule) can be accessed. The top end of the blank capsule 1a may have a flange 14 projecting laterally outwardly with respect to side wall portion 2c.

At the first stage of the filling process as shown in Figure 2, the blank capsule 1a can be placed between or within a suitable holder 7, which defines an opening. The size of the opening defined by holder 7 is slightly larger than the side wall portion 2c such that the blank capsule 1a fits into the opening of holder 7 whilst flange 14 rests on the holder 7. The size of the outer edge of flange 14 is larger than the opening defined by holder 7.

Holder 7 may be part of an apparatus for filling the blank capsule 1a.

In an alternative embodiment indicated in dashed lines, the holder 7 generally follows the contour of the blank capsule 1a so as to form a recess 8 generally corresponding to the shape of the blank capsule 1 a whilst being slightly larger.

Figure 3 shows a second stage of the filling process. As indicated by a downward arrow, coffee precursor 5a is supplied, by means of a filling device 15, into the cavity 12 via opening 13. Only an outlet of the filling device 15 is indicated in Figure 3. Suitable filling devices are, in principle, known in the art. The filling device 15 may alternatively have a wider outlet than shown in Figure 3, for example of a size and shape generally corresponding to the opening 13. Alternatively, the filling device 15 may be provided with several outlets distributed over an area corresponding to the opening 13.

Coffee precursor 5a may fall into the blank capsule 1a through the action of, or assisted by, gravity. Coffee precursor 5a initially forms a substantially uncompressed heap 5a within the cavity 12. The heap of coffee precursor 5a may initially be rounded at the top.

A third stage of the filling process is shown in Figure 4. A mechanical member 9 is moved vertically through opening 13 and partially into the cavity 12 so as to compress the heap of coffee precursor 5a into a layer of compressed coffee precursor 5. Mechanical member 9 can, for example, generally resemble a piston and may therefore have, as shown in Figure 4, a substantially horizontal plate 9a whose shape substantially corresponds to the cross section of the cavity 12, in particular the space within lateral wall portion 2c. The horizontal plate 9a may be connected to a substantially vertical rod 9b, similar to a piston rod, for actuating the plate 9a.

The coffee precursor 5 may be compressed with a pressure of at least 1 bar, at least 2 bar, at least 2.5 bar, or at least 3 bar.

The mechanical member 9 is then withdrawn in the upward direction (not shown).

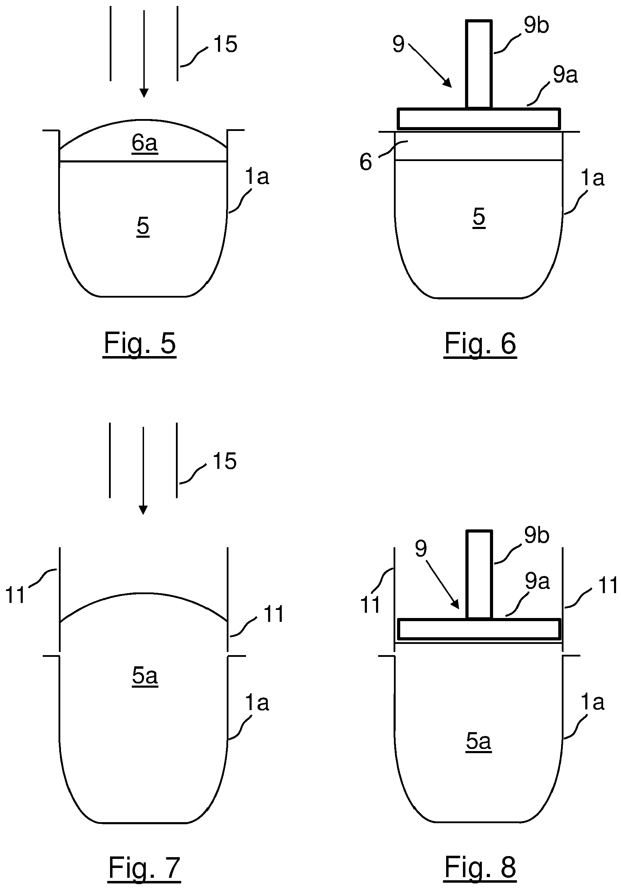

Figure 5 shows a fourth stage of the filling process. Similar to the supplying of coffee precursor 5a into the cavity 12 as shown in Figure 3, a further substance 6a is supplied into the cavity 12 via opening 13. The further substance 6a may be supplied via the same filling device 15, which has previously been used to supply the coffee precursor 5a, or via a different filling device.

The further substance 6a may fall into the cavity 12 through the action of, or assisted by, gravity and may initially form a heap 6a, which may be rounded at the top. As shown in Figure 5, the topmost point of the heap 6a is slightly above the level of the top end of the blank capsule 1a, whereas, at the outer edges, the heap comprising the further substance 6a is slightly below the level of the top edge of the blank capsule 1a.

Figure 6 shows a fifth stage of the process of filling the blank capsule 1a. Similar to what is shown in Figure 4, a mechanical member, which may be the same mechanical member 9 from Figure 4, or a different mechanical member, is used to flatten the heap of the further substance 6a so as to form a layer 6 comprising the further substance. The heap 6a may be compressed with a pressure which is less than 1 bar, or less than 0.8 bar, less than 0.6 bar, less than 0.5 bar, less than 0.4 bar, or about 0.32 bar or 0.3 bar. The pressure is therefore less, or even significantly less, than the pressure with which the coffee precursor has been compressed.

The pressure for compressing the heap 6a may be just enough to flatten the heap of the further substance 6a so that its top surface is substantially flat, or it may compress the heap of the further substance 6a somewhat more than is necessary to achieve this. In any event, the layer 6 comprising the further substance 6a will be less compressed than the layer 5 of coffee precursor 5a.

The mechanical member 9 is then withdrawn (not shown). Thereafter, the blank capsule 1a is sealed with seal 2d so as to form the finished capsule 1 shown in Figure 1. The finished capsule 1 can then be removed or ejected from the holder 7.

Figure 7 shows one stage of an alternative filling process. Figure 7 illustrates a stage generally corresponding to what is shown in Figure 3. However, according to this alternative embodiment, a (significantly) larger amount of coffee precursor 5a is intended to be supplied into the cavity 12 than according to Figure 3. In particular, the volume (or rather the outer envelope) of the heap of uncompressed coffee precursor 5a is greater than the volume of the cavity 12. In order to prevent spillage during the filling process, a filling aid 11 is used. Filling aid 11 may be a tubular member located above opening 13 of blank capsule 1a, in particular at close proximity thereto, so that filling aid 11 effectively forms an extension of side wall 2c of the blank capsule 1a. As indicated in Figure 7, the internal cross-section of filling aid 11 corresponds to the cross-section of the cavity 12 at its upper end. Filling aid 11 can, in particular, be a tubular member.

Once filling aid 11 is in placed above the blank capsule 1a, coffee precursor can be supplied from filling device 15 so as to form an uncompressed heap of coffee precursor 5a. In contrast to Figure 3, the uncompressed heap of coffee precursor 5a of Figure 7 fills the entire cavity 12 and at least part of the filling aid 11.

Subsequently, as indicated in Figure 8, the heap of coffee precursor 5a is compressed by means of the mechanical member 9. To this end, the mechanical member 9 is driven through the filling aid 11 and partially into the cavity 12. As a result, the coffee precursor is compressed into the cavity 12 to a level below the top edge of the blank capsule 1a. In this way, a higher compression of the coffee precursor can be reached when compared with the steps illustrated in Figures 3 and 4. The final state of compression is not shown in Figure 8 - only an intermediate state of compression.

After the coffee precursor 5a has been compressed, as per Figure 8, to form a layer 5 of compressed coffee precursor, the further substance can be supplied into the blank capsule 1a as per Figure 5. Alternatively, the filling aid 11 may, again, be used. It is then also possible to supply a larger amount of the further substance into the blank capsule 1a and partially into the filling aid 11, whereupon this may again be compressed down to a level where it does not project beyond the top edge of the blank capsule 1a.

The filling process (or processes) illustrated in, and/or described with reference to, Figures 1 to 8 can be performed automatically by a filling apparatus. The filling apparatus may in particular comprise any or all of the elements for filling the capsule as illustrated and/or described, in particular the holder 7, filling device(s) 15, mechanical member 9 and, if applicable, filling aid 11. The filling apparatus may also comprise suitable actuators for moving the (blank) capsule and/or the mechanical member and conveying devices for supplying the beverage precursor and/or a device for applying the seal 2d to the filled blank capsule 1a.

According to some embodiments of the present invention, the layer comprising the further substance may comprise several different substances. For example, one of these substances may be an algae product whilst another component of this layer may consist of a different substance. Further, while embodiments of the present invention have been described with reference to two distinct layers within the capsule, it is possible for three or more distinct layers to be provided within the capsule. Additionally, the (layers of) beverage precursor do not necessarily have to fill the entire cavity. Regions resembling layers or pockets (i.e. not only voids between individual granules of beverage precursor, but larger regions outside the layers of beverage precursor) may remain free of beverage precursor and may be filled with a gas, e.g. an inert gas, such as CO₂ or N₂.

Although the invention has been described in terms of preferred embodiments as set forth above, it should be understood that these embodiments are illustrative only and that the claims are not limited to those embodiments. Those skilled in the art will be able to make modifications and alternatives in view of the disclosure which are contemplated as falling within the scope of the appended claims.

### List of Reference Signs

- 1: beverage capsule
- 1a: blank capsule
- 2a: containment wall at one axial end
- 2b, 2c: lateral containment wall portions
- 2d: containment wall at other axial end; seal
- 3: inlet side
- 4: outlet side
- 5: layer of compressed coffee precursor
- 5a: (uncompressed heap of) coffee precursor
- 6: layer comprising further substance
- 6a: (uncompressed heap comprising) further substance
- 7: holder
- 8: recess
- 9: mechanical member
- 9a: (piston) plate
- 9b: (piston) rod
- 10: interface
- 11: filling aid
- 12: cavity
- 13: opening
- 14: flange
- 15: (outlet of) filling device

## Claims

1. A capsule for the preparation of a beverage in a beverage machine by feeding liquid into the capsule and extracting a beverage out of the capsule, wherein the capsule comprises containment walls forming an interior cavity containing a beverage precursor for mixing with the liquid in the cavity, wherein the beverage precursor comprises a layer of compressed coffee precursor and a layer comprising a further substance, wherein the layer of compressed coffee precursor is more compressed than the layer comprising the further substance.

2. The capsule according to claim 1, wherein the capsule comprises an outlet side through which the beverage is arranged to be extracted, wherein the layer comprising the further substance is located between the layer of coffee precursor and the outlet side.

3. The capsule according to claim 1 or 2, wherein the further substance is more heat-sensitive than the coffee precursor.

4. The capsule according to any one of the preceding claims, wherein the further substance comprises an algae product.

5. A capsule for the preparation of a beverage in a beverage machine by feeding liquid into the capsule and extracting a beverage out of the capsule through an outlet side of the capsule, wherein the capsule comprises containment walls forming an interior cavity containing a beverage precursor for mixing with the liquid in the cavity, wherein the beverage precursor comprises a layer of coffee precursor and a layer comprising a further substance comprising an algae product, wherein the layer comprising the further substance is located between the layer of coffee precursor and the outlet side.

6. The capsule according to claim 4 or 5, wherein the algae product comprises an algae, an algae extract or algae biomass, in particular Spirulina or a product derived therefrom.

7. The capsule according to any one of the preceding claims, wherein the further substance is at least partially soluble in water, in particular substantially soluble in water, in particular at temperatures above 55°C.

8. The capsule according to any one of the preceding claims, wherein the layer of coffee precursor occupies substantially the entire cross-section of the cavity in a first plane, and/or the layer comprising the further substance occupies substantially the entire cross-section of the cavity in a second plane.

9. The capsule according to any one of the preceding claims, wherein the layer of coffee precursor is compressed with a pressure of over 1 bar, more preferably with a pressure of over 2 bar, still more preferably with a pressure of over 2.5 bar, and most preferably with a pressure of over 3 bar,
and / or
wherein the layer comprising the further substance is compressed with a pressure of less than 1 bar, more preferably with a pressure of less than 0.8 bar, more preferably with a pressure of less than 0.6 bar, more preferably with a pressure of less than 0.5 bar, still more preferably with a pressure of less than 0.4 bar and most preferably with a pressure of about 0.32 or 0.3 bar.

10. A method of filling a capsule, the capsule being a capsule for the preparation of a beverage in a beverage machine by feeding liquid into the capsule and extracting a beverage out of the capsule, wherein the method comprises:
- providing a capsule comprising containment walls and an opening, the containment walls and the opening defining an interior cavity,
- supplying a beverage precursor through the opening into the cavity, the beverage precursor being for mixing with the liquid in the cavity and comprising coffee precursor and a further substance, and
- substantially sealing the opening,
wherein supplying the beverage precursor through the opening into the cavity comprises:
- supplying the coffee precursor through the opening into the cavity,
- compressing the coffee precursor so as to form a layer of compressed coffee precursor in the cavity, and
- supplying the further substance through the opening into the cavity so as to form a layer comprising the further substance in the cavity,
wherein the layer of compressed coffee precursor is more compressed than the layer comprising the further substance.

11. A method of filling a capsule, the capsule being a capsule for the preparation of a beverage in a beverage machine by feeding liquid into the capsule and extracting a beverage out of the capsule through an outlet side of the capsule, wherein the method comprises:
- providing a capsule comprising containment walls and an opening, the containment walls and the opening defining an interior cavity,
- supplying a beverage precursor through the opening into the cavity, the beverage precursor being for mixing with the liquid in the cavity and comprising coffee precursor and a further substance comprising an algae product, and
- substantially sealing the opening,
wherein supplying the beverage precursor through the opening into the cavity comprises:
- supplying the coffee precursor through the opening into the cavity so as to form a layer of coffee precursor in the cavity, and
- supplying the further substance through the opening into the cavity so as to form a layer comprising the further substance in the cavity,
wherein the coffee precursor and the further substance are supplied into the cavity in such a way that the layer comprising the further substance is located between the layer of coffee precursor and the outlet side.

12. The method according to claim 10 or 11, wherein the coffee precursor and the further substance are supplied into the cavity in such a way that the layer of coffee precursor occupies substantially the entire cross-section of the cavity in a first plane, and/or the layer comprising the further substance occupies substantially the entire cross-section of the cavity in a second plane.

13. The method according to any one of claims 10 to 12, further comprising compressing the layer of coffee precursor with a pressure of over 1 bar, more preferably with a pressure of over 2 bar, still more preferably with a pressure of over 2.5 bar, and most preferably with a pressure of over 3 bar.

14. The method according to any one of claims 10 to 13, further comprising compressing the layer comprising the further substance with a pressure of less than 1 bar, more preferably with a pressure of less than 0.8 bar, more preferably with a pressure of less than 0.6 bar, more preferably with a pressure of less than 0.5 bar, still more preferably with a pressure of less than 0.4 bar and most preferably with a pressure of about 0.32 or 0.3 bar.

15. A beverage obtained from a capsule according to any one of claims 1 to 9 and/or by means of a method according to any one of claims 10 to 14.

16. A capsule filling apparatus arranged to manufacture a capsule according to any one of claims 1 to 9 and/or arranged to carry out a method according to any one of claims 10 to 14.
